# EUROPEAN PATENT APPLICATION

(11) **EP 1 458 042 A1**
(43) Date of publication of application: **15.09.2004**
(21) Application number: 04251331.7
(22) Date of filing: 08.03.2004
(51) Int. Cl.: H01M 8/02

(54) **Porous member, method of manufacturing the same and electrochemical device using the same**

(30) Priority: 11.03.2003 JP 2003065138
(71) Applicant: SUMITOMO ELECTRIC INDUSTRIES, LTD., Osaka-shi, Osaka (JP); TOYOTA JIDOSHA KABUSHIKI KAISHA, Toyota-shi, Aichi 471-8571 (JP)
(72) Inventor: Harada, Keizo c/o Itami Works, Itami-shi Hyogo (JP); Sano, Seiji c/o Toyota Jidosha K.K., Toyota-shi Aichi-ken 471-8571 (JP); Kajiwara, Takashi c/o Toyota Jidosha K.K., Toyota-shi Aichi-ken 471-8571 (JP); Shiraishi, Takayoshi c/o Toyota Jidosha K.K., Toyota-shi Aichi-ken 471-8571 (JP)
(74) Representative: Cross, Rupert Edward Blount

(57) **Abstract**

A porous member is proposed which can be used as a gas diffusion electrode/separator of a proton exchange membrane fuel cell, is inexpensive and has superior long-term reliability, has low voltage loss when used as an electrode, and makes it possible to improve the power generating performance of the fuel cell and stabilize the power generating performance for a long time. A metallic porous body having a three-dimensional network structure and having an average pore diameter of 50 µm - 1 mm and a porosity of not less than 80% is joined to a metal substrate such as metal foil by solid phase diffusion treatment to form an integral porous member.

## Description

This invention relates to a porous member used for an electrode board or the like, a method of manufacturing the same, and an electrochemical device such as a proton exchange membrane fuel cell.

JP patent 3211378 discloses a foamed metal having its part subjected to water repellent treatment for gas diffusion electrodes of a proton exchange membrane fuel cell to improve the gas diffusing property and the conductivity of the electrode, thereby improving the power generating performance of the fuel cell.

Also, JP patent 2953555 discloses using a metallic porous body having a network structure of metallic wire as a collecting electrode (which also serves as a gas diffusing layer) of a proton exchange membrane fuel cell to reduce the contact resistance by utilizing high localization pressure of the metallic porous body with respect to e.g. a bipolar plate at a terminal end of the metal wire.

Further, US patent 5,798,187 discloses applying a metal mesh screen to a gas diffusing electrode of a proton exchange membrane fuel cell to improve the collecting performance and the gas diffusing properties, and also to reduce the size and weight of the fuel cell.

The fuel cell of JP patent 3211378 has a problem in the corrosion resistance of the foamed metal applied to a gas diffusing electrode.

Since the electrode members of a proton exchange membrane fuel cell are exposed to strong acidic atmosphere, metal such as nickel, copper and aluminum would tend to corrode, and metal components elute and decrease the activity of a catalyst. This results in reduced generating performance. Also, as a measure against it, if a coating of a chemically stable precious metal such as platinum or gold is formed to increase the corrosion resistance of the foamed metal, the cost will increase. Thus, it is difficult to achieve both long-term performance and low cost.

Also, in the fuel cells shown in JP patent 2953555 and US patent 5,798,187, if as a material for the metallic porous body or metal mesh screen, a corrosion-resistant metal such as stainless steel having superior corrosion resistance is used, the contact resistance between members (between the gas diffusing electrode and a separator) will increase due to a strong passive state film of chrome oxide produced on the surface. Thus, the generating performance will not increase.

If the same stainless steel is also used for the separator, the contact resistance will further increase. This further reduces the generating performance.

If a coating of a precious metal such as platinum or gold is formed on the surface of each electrode or separator, it is possible to increase the corrosion resistance and also reduce the contact resistance. But this method increases the material cost and is not suitable for general purpose industrial articles.

According to this invention, there is provided a porous member comprising a metallic porous body having a three-dimensional network structure and having the average pore diameter of 50 µm to 1 mm and the porosity of 80% or over, and a metallic substrate, the metallic porous body and the metallic substrate being joined together by solid phase diffusing treatment so as to form an integral structure.

The metallic porous body and/or the metal substrate is formed of a material which comprises an Fe-Cr or Ni-Cr alloy containing at least one element selected from the group consisting of Ni, Mo, Cu, B, Al, Si, Ti and C.

The porous member is preferably one in which the electrical resistance at the joint surface between the metallic porous body and the metal substrate is not more than 4.5 mΩ .cm², or the oxygen concentration at the joint surface between skeleton portion of the metallic porous body and the metal substrate is not more than 10 wt%.

This porous member is manufactured by laminating a metallic porous body and a metal substrate, and subjecting them to heat treatment at a temperature of not less than 900 °C and not more than 1300 °C under pressurized state in a reducing atmosphere to join the metallic porous body and the metal substrate together by solid phase diffusion at the interface.

According to this invention, there is provided an electrochemical device wherein the porous members are arranged on both sides of a high-molecular electrolytic film and a catalyst electrode layer to function as a gas diffusing electrode and a separator.

With the porous member of this invention, because the metallic porous body and the metal substrate, which is in the form of metal foil, are integrated, the contact resistance at the joint surface markedly decreases. Thus, if it is used as a gas diffusion electrode of a fuel cell which also serves as a separator, it is possible to improve the power generating performance.

Also, because the metallic porous body which serves as a gas diffusing electrode, and a metal substrate which serves as a separator, are integrally joined, the ease of assembling of the device is improved.

If the metallic porous body or the metal substrate is formed of a material which comprises an Fe-Cr alloy or Ni-Cr alloy containing at least one element selected from Ni, Mo, Cu, B, Al, Si, Ti and C, it is possible to design an alloy that satisfies desired properties. Thus it is possible to provide a porous member that satisfies the required properties such as conductivity, strength, heat resistance and corrosion resistance according to the use environment.

In case it is used as an electrode plate, the electrical resistance at the joint surface between the metallic porous body and the metal substrate is desirably as low as possible. According to this invention in which the metallic porous body and the metal substrate are joined together by solid layer diffusion, it is possible to achieve an electrical resistance not more than 4.5 mΩ .cm².

The oxygen concentration at the joint interface between the skeleton portion of the metallic porous body and the metal substrate is preferably not more than 10 wt% for the following reason. In joining by solid layer diffusion, since oxygen in oxide films produced on the surfaces of the metallic porous body and the metal substrate diffuses into the matrix, the oxygen concentration at the interface decreases. Thus, the oxygen concentration at the interface can be used as an index for determining the degree of solid phase diffusion. If the oxygen concentration is not more than 10 wt%, this means that joining by solid phase diffusion has been done favorably, so that the electrical resistance at the joint surface decreases markedly.

The porous member of this invention can be manufactured at a low cost by the abovementioned method. Thus the cost of an electrochemical device using the porous member can also be reduced. Further, since the contact resistance between the metallic porous body and the metal substrate is low, the voltage loss is small when the metallic porous body is used as a gas flow path and diffusing electrode of a fuel cell and the metal substrate is used as a separator. Thus the power generating performance of the fuel cell improves.

Other features and objects of the present invention will become apparent from the following description made with reference to the accompanying drawings, in which:
Fig. 1 is a sectional view schematically showing the porous member of this invention;
Fig. 2 is a schematic view showing the joint portion between the metallic porous member and the metal substrate; and
Fig. 3 is a schematic view of an electrochemical device using the porous member of this invention as a gas diffusion electrode/separator.

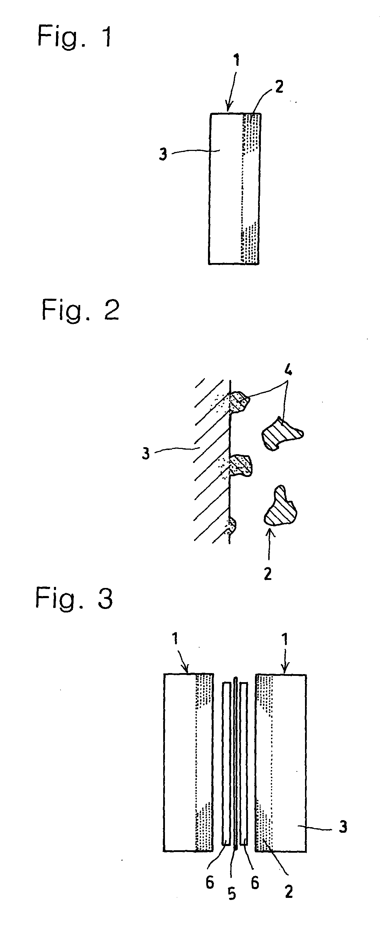

Fig. 1 shows a porous member 1 according to this invention. It comprises a metallic porous body 2 having a three-dimensional network structure, and a metal substrate 3.

The metallic porous body 2 is formed of a material which comprises an Fe-Cr or Ni-Cr alloy containing at least one element selected from among Ni, Mo, Cu, B, Al, Si, Ti and C. Further, the metallic porous body 2 has an average pore diameter of 50 µm to 1 mm and a porosity of not less than 80%.

On the other hand, for the metal substrate 3, metal foil is used which is formed of a material which comprises an Fe-Cr or Ni-Cr alloy containing at least one element selected from among Ni, Mo, Cu, B, Al, Si, Ti and C, as with the metallic porous body 2, or a stainless steel comprising an Fe-Cr-Ni alloy to which Mo is added.

The metallic porous body 2 and the metal substrate 3 are laminated together and pressurized at a suitable pressure. In this state, they are placed in a reduced atmosphere, and heat-treated at a temperature of 900 °C to 1300 °C for a required period of time to join them together by solid phase diffusion.

Fig. 2 schematically shows an integral structure wherein skeleton portions 4 of the metallic porous body 2 are locally in contact with the metal substrate 3, and the contact portions are bonded together by solid phase diffusion, so that the contact resistance at the joint portion reduces.

There is proposed in JP patent application 2002-82484 a metallic porous body having a three-dimensional network structure in which the porosity at the surface is reduced compared with the porosity at the core portion. The use of such a metallic porous body makes it possible to further reduce the contact resistance by increasing the contact area with the metal substrate 3.

Fig. 3 schematically shows an electrochemical device using the porous member 1 according to this invention. In Fig. 3, on both sides of a high-molecular electrolytic film 5, a catalyst electrode 6 and the porous member 1 of this patent are arranged facing each other so that the metallic porous body 2 of the porous member 1 functions as a gas flow path/diffusion electrode and the metal substrate 3 functions as a separator. In Fig. 3, a one-cell electrochemical device is shown. But by using members having metallic porous bodies 2 arranged on both sides of the metal substrate 3, it is possible to provide series-stacked, multiple-cell electrochemical devices.

Below, more detailed examples will be described.

### [Examples]

The metallic porous bodies and metal foils having compositions shown in Table 1 were combined, stacked, pressurized at a pressure of 25 g/cm², and heat-treated at 1200 °C for 30 minutes keeping this pressurized state. Thereby, porous members No. 1-No. 10 were obtained in which the metallic porous body and the metal foil were integrated by solid phase diffusion.

The pressurizing pressure for obtaining the stacked materials during this manufacturing step is preferably 0.1 g/cm² to 1 kg/cm². If less than 0.1 g/cm², poor joining will result. On the other hand, if more than 1 kg/cm², the metallic porous body may be compressed and collapse during heat treatment.

**TABLE 1**

| No | Metallic porous body | | | | Metal foil | |
|---|---|---|---|---|---|---|
| | Material | Thickness | Average pore diameter | Porosity | Material | Thickness |
| 1 | Ni-30Cr | 1.0mm | 500 µm | 90% | Fe-18Cr-12Ni-2.5Mo | 0.1 |
| 2 | Fe-18Cr-2.5Mo-0.5C | 1.0mm | 500 µm | 92% | Fe-18Cr-12Ni-2.5Mo | 0.2 |
| 3 | Fe-28Cr-4Mo-2Ni-0.5C | 1.0mm | 500 µm | 95% | Fe-18Cr-12Ni-2.5Mo | 0.2 |
| 4 | Fe-28Cr-4Mo-2Ni-0.5C | 0.5mm | 100 µm | 82% | Fe-18Cr-12Ni-2.5Mo | 0.2 |
| 5 | Fe-28Cr-4Mo-2Ni-0.5C | 0.5mm | 300 µm | 94% | Fe-18Cr-12Ni-2.5Mo | 0.5 |
| 6 | Fe-28Cr-4Mo-2Ni-0.5C | 0.5mm | 800 µm | 98% | Fe-18Cr-12Ni-2.5Mo | 0.5 |
| 7 | Fe-25Cr-4Mo-0.5Cu | 1.0mm | 500 µm | 88% | Fe-25Cr-12Ni-2.5Mo | 0.5 |
| 8 | Fe-20Cr-4Mo-1.5Al | 1.0mm | 500 µm | 96% | Fe-25Cr-8Ni-3.5Mo | 0.3 |
| 9 | Fe-25Cr-1.5Ti | 1.0mm | 100 µm | 96% | Fe-25Cr-8Ni-3.5Mo | 0.3 |
| 10 | Fe-28Cr-4Mo-1.5B-0.3C | 1.0mm | 800 µm | 96% | Fe-25Cr-8Ni-3.5Mo | 0.3 |

The metallic porous bodies used for the porous members No. 1-No. 10 of Table 1 were immersed in 1N sulfuric acid solution at 25 °C , and after 24 hours have passed, the weight reduction rate and the compression strength were measured. The results are shown in Table 2.

**TABLE 2**

| | Material | Weight reduction rate (%) | Compression strength (MPa) |
|---|---|---|---|
| 1 | Ni-30Cr | 6.3 | 4.2 |
| 2 | Fe-18Cr-2.5Mo-0.5C | 17.3 | 2.1 |
| 3 | Fe-28Cr-4Mo-2Ni-0.5C | 0.02 | 1.8 |
| 4 | Fe-28Cr-4Mo-2Ni-0.5C | 0.02 | 3.1 |
| 5 | Fe-28Cr-4Mo-2Ni-0.5C | 0.02 | 1.9 |
| 6 | Fe-28Cr-4Mo-2Ni-0.5C | 0.02 | 0.8 |
| 7 | Fe-25Cr-4Mo-0.5Cu | 0.03 | 2.3 |
| 8 | Fe-20Cr-4Mo-1.5AI | 2.1 | 1.2 |
| 9 | Fe-25Cr-1.5Ti | 3.8 | 1.2 |
| 10 | Fe-28Cr-4Mo-1.5B-0.3C | 0.02 | 1.3 |

If the weight reduction rate due to corrosion is large, the strength of the metallic porous body will decrease markedly. This makes it unsuitable as a material not only for electrodes but for various members. Thus, the weight reduction rate due to corrosion is preferably not more than 20 wt%. The compression strength is preferably not less than 1 MPa in order to perform the required functions by maintaining a porous structure even in a press state resulting from lamination of a plurality of members. The metallic porous bodies shown in Table 2 all satisfy the requirements in the weight reduction rate. As for the compression strength, except that the No. 6 metallic porous body, which is small in thickness and large in porosity, is slightly lower than 1 MPa, all have strength over 1 MPa.

Further, for the porous members No. 1 to No. 8 of Table 1, the contact resistance at the joint surface between the metallic porous body and the metal foil was measured. The results are shown in Table 3. Also, as a comparative example, the metallic porous body and the metal foil used for No. 3 porous member in Table 1 were simply laminated without bonding by solid phase diffusion and the contact resistance was measured. The result is shown in Table 3. The contact resistance was measured with the specimens pressurized at 0.5 MPa.

**TABLE 3**

| Porous member | Contact resistance m Ω ·cm² | Oxygen concentration at interface (wt%) |
|---|---|---|
| No. 1 | 2.9 | 0.7 |
| No. 2 | 2.1 | 0.6 |
| No. 3 | 1.8 | 0.5 |
| No. 4 | 1.1 | 0.5 |
| No. 5 | 2.2 | 0.6 |
| No. 6 | 3.3 | 0.5 |
| No. 7 | 1.3 | 0.6 |
| No. 8 | 2.1 | 0.3 |
| Comp. Ex. | 75.3 | 32 |

Next, using NAFION (made by Du Pont, film thickness: 100 µ m) as the high-molecular electrolytic film, catalyst electrodes carrying platinum catalysts are arranged on both sides of the high-molecular electrolytic film as shown in Fig. 3, and porous members of Table 3 were arranged outside thereof as a gas diffusion electrode and a separator. By using the cell thus formed, a proton exchange membrane fuel cell was manufactured.

For the performance evaluation of this fuel cell, the voltage of the initial cell when fuel gas has been introduced into the cell and the cell voltage after 100 hours have passed were measured. The results are shown in Table 4.

**TABLE 4**

| Porous member used | Initial cell voltage (V) | Cell voltage after 100Hr |
|---|---|---|
| No. 1 | 0.74 | 0.68 |
| No. 2 | 0.74 | 0.61 |
| No. 3 | 0.74 | 0.74 |
| No. 4 | 0.75 | 0.75 |
| No. 5 | 0.75 | 0.75 |
| No. 6 | 0.72 | 0.67 |
| No. 7 | 0.75 | 0.75 |
| No. 8 | 0.74 | 0.74 |
| Comp. Ex. | 0.59 | 0.53 |

As will be apparent from these examples, with the porous member of this invention, the metallic porous body and the metal substrate are integrated, so that the contact resistance between them has been markedly reduced. Thus, if it is used as a gas diffusion electrode/separator of a proton exchange membrane fuel cell, voltage loss will decrease, so that the power generating performance will improve. Further, deterioration of the power generating performance with time is suppressed, so that the long-term performance of the cell improves.

Further, since it is possible to improve the long-term performance without carrying out coating using an expensive precious metal, it is possible to cut the cost and thus to provide an inexpensive fuel cell.

## Claims

1. A porous member comprising a metallic porous body having a three-dimensional network structure and having the average pore diameter of 50 µm to 1 mm and the porosity of 80% or over, and a metal substrate, said metallic porous body and said metal substrate being joined together by solid phase diffusing treatment so as to form an integral structure.

2. A porous member as claimed in claim 1 wherein said metallic porous body and/or said metal substrate is formed of a material which comprises an Fe-Cr or Ni-Cr alloy containing at least one element selected from the group consisting of Ni, Mo, Cu, B, Al, Si, Ti and C.

3. A porous member as claimed in claim 1 or 2 wherein the electrical resistance at the joint surface between said metallic porous body and said metal substrate is not more than 4.5 m Ω .cm².

4. A porous member as claimed in claim 1 or 2 wherein the oxygen concentration at the joint surface between skeleton portion of said metallic porous body and said metal substrate is not more than 10 wt%.

5. A method of manufacturing a porous member, comprising the steps of laminating a metallic porous body and a metal substrate, and subjecting them to heat treatment at a temperature of not less than 900 °C and not more than 1300 °C under pressurized state in a reducing atmosphere to join said metallic porous body and said metal substrate together by solid phase diffusion at the interface.

6. An electrochemical device wherein the porous members as claimed in any of claims 1-4 are arranged on both sides of a proton exchange membrane and a catalyst electrode layer to function as a gas diffusing electrode and a separator.
